(19) Europäisches Patentamt / European Patent Office / Office européen des brevets

(11) **EP 4 782 295 A1**

(12) **EUROPEAN PATENT APPLICATION**

(43) Date of publication:
**29.07.2026 Bulletin 2026/31**

(21) Application number: **25153806.2**

(22) Date of filing: **24.01.2025**

(51) International Patent Classification (IPC):
**B60W 30/18** (2012.01)   **B60W 40/04** (2006.01)
**B60W 50/00** (2006.01)   **B60W 60/00** (2020.01)

(52) Cooperative Patent Classification (CPC):
**B60W 30/18163; B60W 40/04; B60W 50/0097;
B60W 60/001; B60W 60/0017; B60W 60/0027;**
B60W 2554/4023; B60W 2554/4045

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Bayerische Motoren Werke
Aktiengesellschaft
80809 München (DE)**

(72) Inventor: **Brewis, Louis Hugo
89134 Blaustein (DE)**

(54) **METHOD AND SYSTEM FOR PERFORMING A BUS-ALIGNED MANEUVER BY A DRIVING AUTOMATION SYSTEM FEATURE OF A VEHICLE**

(57)    The present disclosure relates to performing a bus-aligned maneuver by a driving automation system feature of a vehicle. The bus-aligned maneuver is aligned with an upcoming driving maneuver of a bus. The bus is detected in a vicinity of the vehicle at least based on automotive sensor data captured by one or more automotive sensors of the vehicle. Then, the upcoming driving maneuver of the detected bus is determined based on one or more of the automotive sensor data, bus data and/or map data, based on the upcoming driving maneuver of the detected bus, the bus-aligned maneuver is detected. Finally, the vehicle is caused to perform the bus-aligned maneuver.

Fig. 2B

**Description**

TECHNICAL FIELD

The invention generally relates to trajectory planning by a driving automation system feature of a vehicle and more precisely to determining maneuvers by a driving automation system feature which are aligned with and facilitate maneuvers of buses.

BACKGROUND

When driving within city limits, at least partially automated vehicles are confronted with various types of road users with different behaviors, space requirements and protection needs. One such type of road user includes buses and in particular public transport buses. Buses tend to stop often, require more space than other road users and exhibit large turn radii when turning at intersections. These aspects are rendered even more complex in inner city settings, where buses form an important part of public transport. Accordingly, at least partially automated vehicles should account for buses in their maneuver planning to avoid obstructing public transport.

Therefore, it is an object of the present disclosure to determine and perform driving maneuvers of an at least partially automated vehicle in a manner aligned with driving maneuvers of buses.

SUMMARY OF THE INVENTION

To achieve this objective, the present disclosure provides a method for performing a bus-aligned maneuver by a driving automation system feature of a vehicle. The bus-aligned maneuver is aligned with an upcoming driving maneuver of a bus. The method comprises: detecting a bus in a vicinity of the vehicle at least based on automotive sensor data captured by one or more automotive sensors of the vehicle, determining the upcoming driving maneuver of the detected bus based on one or more of the automotive sensor data, bus data and/or map data, determining the bus-aligned maneuver based on the upcoming driving maneuver of the detected bus and causing the vehicle to perform the bus-aligned maneuver.

The present disclosure further provides a corresponding automotive control unit and a vehicle comprising the automotive control unit.

BRIEF DESCRIPTION OF THE DRAWINGS

Examples of the present disclosure will be described with reference to the following appended drawings, in which like reference signs refer to like elements.

Figs. 1A and 1B show a flowchart of a method for performing a bus-aligned maneuver by a driving automation system feature of a vehicle according to examples of the present disclosure.

Figs. 2A to 2D illustrate various examples of bus-aligned maneuvers in the context of a bus stopping at a bus stop according to examples of the present disclosure.

Fig. 3 illustrates an example of a bus-aligned maneuver in the context of a bus approaching a bus stop according to examples of the present disclosure.

Fig. 4 illustrates an example of a bus-aligned maneuver in the context of a bus turning at an intersection according to examples of the present disclosure.

Figs. 5A and 5B illustrate examples of bus-aligned maneuvers in the context of trajectories of a bus and an at least partially intersecting on a narrow road according to examples of the present disclosure.

Fig. 6 illustrates a vehicle according to examples of the present disclosure.

Fig. 7 illustrates an automotive control unit according to examples of the present disclosure.

It should be understood that the above-identified drawings are in no way intended to limit the present disclosure. Rather, these drawings are provided to assist in understanding the present disclosure. The person skilled in the art will readily understand that aspects of the present invention shown in one drawing may be combined with aspects in another drawing or may be omitted without departing from the scope of the present disclosure.

DETAILED DESCRIPTION

The present disclosure provides a method and a corresponding automotive control unit configured to determine and perform a bus-aligned maneuver by a driving automation system feature of a given vehicle. In the context of the present disclosure, a bus-aligned maneuver is to be understood as a driving maneuver of a given vehicle aligned with an upcoming driving maneuver of a bus, i.e. a driving maneuver which takes into account various aspects of the driving environment, e.g. bus related aspects, such as the size as well as the trajectory of a given bus, and road related aspects, such as a road width and a road layout, and facilitates an upcoming driving maneuver of a bus, i.e. an anticipated trajectory and the corresponding one or more driving maneuvers of a given bus.

To determine bus-aligned maneuvers, a bus in the vicinity of a given vehicle is detected, which may include determining the line number and/or the position of the bus. Based on the detection of the bus in the vicinity the vehicle, an upcoming driving maneuver of the bus is detected, e.g. based on a bus stop determined or detected in the vicinity as well as routing information based on the line number of the bus. Based on the determined upcoming driving maneuver of the bus, the bus-aligned driving maneuver is then determined, e.g. by evaluating overtaking opportunities, determining a turn radius of the bus or a passable width of a road.

Finally, the driving automation system feature of the vehicle causes the vehicle to perform the bus-aligned maneuver, e.g. by directly performing lateral and longitudinal control of the vehicle directly or by providing the bus-aligned maneuver to a further driving automation system feature configured to perform lateral and longitudinal control of the vehicle.

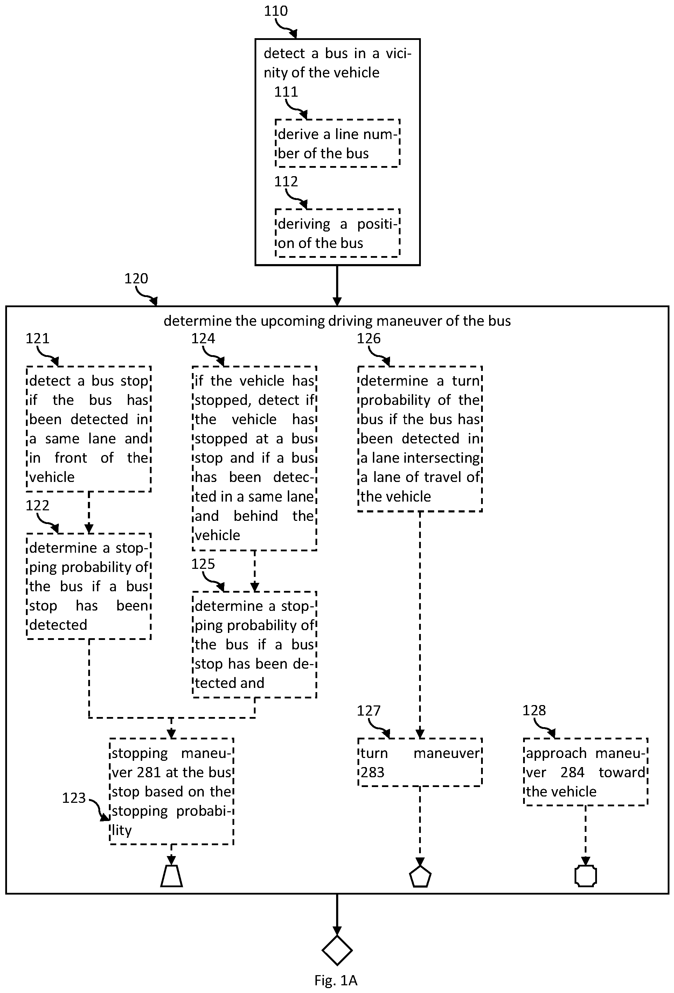

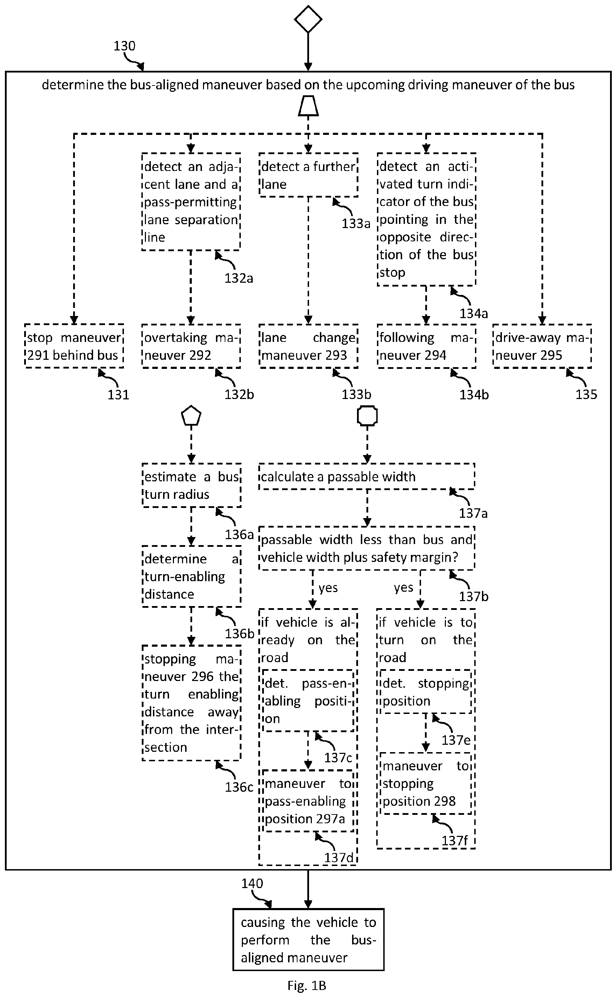

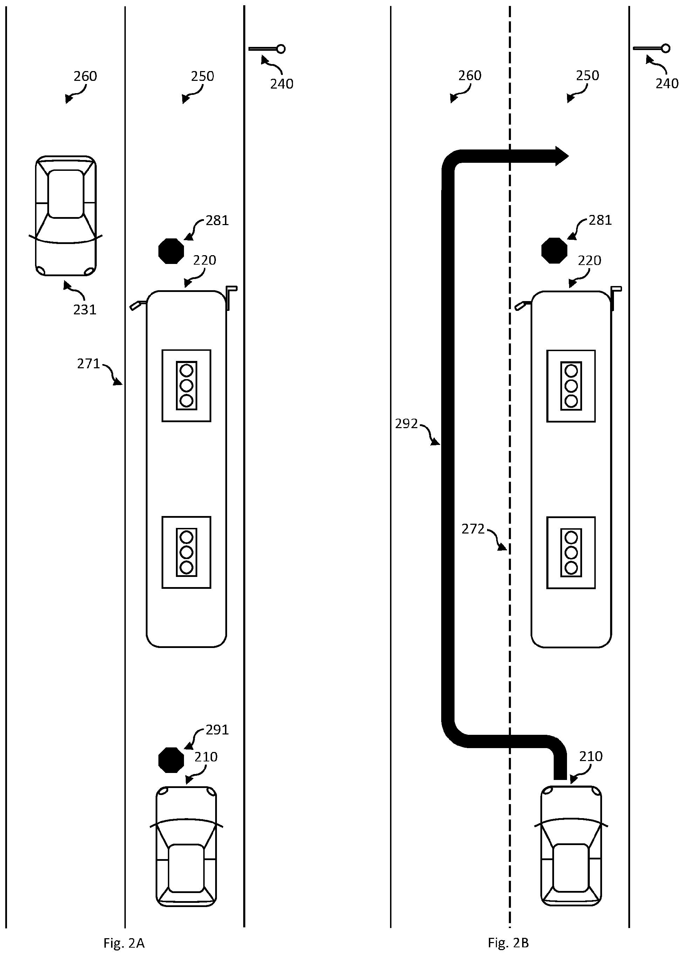

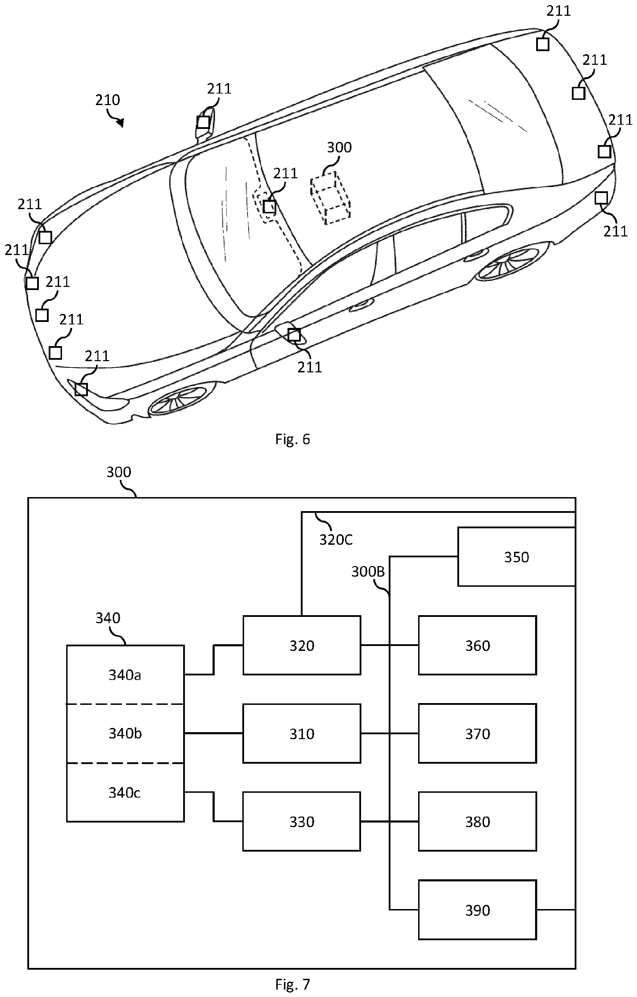

This general concept will now be described with reference to the appended drawings, with Figs. 1A and 1B illustrating a method configured to perform a bus-aligned maneuver by a driving automation system feature of a vehicle as well as specific aspects thereof in accordance with the present disclosure. Figs. 2A to 5B illustrate various bus-aligned maneuvers determined and performed based on the method configured to perform a bus-aligned maneuver. Finally, Figs. 6 and 7 illustrate a vehicle and an automotive control unit configured to perform the method configured to perform the bus-aligned maneuver.

It will be understood that dashed boxes in Figs. 1A and 1 B illustrate optional method steps.

Fig. 1 shows a flowchart of method 100. Method 100 is configured to perform a bus-aligned maneuver by a driving automation system feature of a vehicle, such as vehicle 210 as shown in Figs. 2A to 5B and illustrated in more detail in Fig. 6.

In the context of the present disclosure, driving automation system feature is to be understood in the sense of standard J3016 of SAE International as design-specific functionality of a driving automation system at a given level of driving automation, i.e. in the context of the present disclosure any one of levels 2 to 5 of driving automation as defined in the taxonomy of driving automation of standard J3016. More precisely, the driving automation system feature of vehicle 210 is configured to determine the bus-aligned driving maneuver of vehicle 210 and to thereby at least indirectly determine the longitudinal and lateral control associated with the determined bus-aligned maneuver and consequently to cause vehicle 210 to perform the bus-aligned maneuver. As the performance of the bus-aligned maneuver may be supervised by the driver or because the driver may at least serve as a fallback-ready user, the driving automation system feature of vehicle 210 is to be understood to be at least a level 2 driving automation system feature. In view of the driving automation system feature, vehicle 2100 may also be referred to as at least partially automated vehicle 210.

Vehicle in the context of the present disclosure, such as vehicles 210, refers to any kind of motor vehicle configured to transport people and/or cargo. The motor of vehicle 210 may be any kind of motor, such as an electric motor or an internal combustion engine. Vehicle 210 may e.g. be a passenger vehicle or any other kind of vehicle including one or more automotive sensors 211 and an automotive control unit 300 enabling vehicle 210 to perform the driving automation system feature performing method 100. The one or more automotive sensors 211 may thus be any type of automotive sensor configured to capture automotive sensor data indicative of a driving environment of vehicle 210, thereby providing environmental awareness enabling the driving automation system feature to determine and perform bus-aligned maneuvers. The one or more automotive sensors 211 may e.g. be cameras, infrared cameras, radar sensors or LiDAR sensors of varying capturing ranges and resolutions.

It will be understood that the above discussion regarding vehicle 210 applies to any one of vehicles 210 to 233 shown in Figs. 2A to 5B and further generally applies to bus 220, with the differences essentially being the size and the number of potential passengers.

In step 110, method 100 detects bus 220 in a vicinity of vehicle 210 based at least on the automotive sensor data captured by one or more automotive sensors 211. In other words, method 100 detects bus 220 in the vicinity of vehicle 210 at least based on the environmental awareness provided by automotive sensors 211. Accordingly, the vicinity of vehicle 210 corresponds at least to the capturing or detection range of automotive sensors 211.

The detection of bus 220 in the vicinity of vehicle 210 in step 110 may further take additional sets of data into account and/or may derive further information pertaining to bus 220. To this end, step 110 may include any one of steps 111 or 112.

In step 111, method 100 may derive a line number of bus 220 from the automotive sensor data if a line number display is detected on the bus. That is, method 100 may in step 111 determine whether the automotive sensor data, such as camera or image data, include an indication of the line number of bus 220, as typically shown on some or all sides of a public transport bus. If the line number display is not detected on bus 220, method 100 may in step 111 derive the line number of bus 220 from a position of vehicle 210 and bus data, which include bus scheduling data, i.e. data indicative of one or more bus lines and current bus data, i.e. data indicative of one or more current positions of one or more buses. Put differently, if the line number of bus 220 cannot be derived from the automotive sensor data, method 100 may query data indicating bus schedules and current bus positions, as e.g. provided by transport agencies or other public transport providers, and compare this data with the position of vehicle 210 in order to derive which bus of which bus line has most probably been detected in the vicinity of vehicle 210.

In step 112, method 100 may derive a position of bus 210 based on the bus data and/or map data. That is, method 100 may in step 112 determine the position of bus 210 to at least some degree of certainty in addition to generally detecting bus 220 in the vicinity of vehicle 210 in order to subsequently better determine the upcoming driving maneuver of bus 220.

It will be understood that map data in the context of the present disclosure may include any kind of data indicative at least of vehicular infrastructure, such as roads, streets, controlled-access highways or bus stops, the connectivity thereof at any level of resolution and traffic regulations, such as speed limits, turn regulations and lane markings, in order to enable vehicle 210 to perform at least partial driving automation and thereby to determine both the upcoming driving maneuvers of bus 220 and bus-aligned maneuvers of vehicle 210. To this end, the map data may include further information, such as non-vehicular infrastructure, buildings, geographic features.

Based on the detection of bus 220 in the vicinity of vehicle 210 and optionally the derived line number and position of bus 220, method 100 proceeds to step 120 to determine the upcoming driving maneuver of bus 220 based on one or more of the automotive sensor data, the bus data and/or the map data. That is, method 100 may use the environmental awareness provided by automotive sensors 211, the information obtained in steps 110 to 112 as well as the bus data, the map data and/or additional sets of data in order estimate what kind of driving maneuver bus 220 may perform in order to subsequently determine a driving maneuver of vehicle 210 aligned therewith.

Depending on a road layout, a bus stop position and/or a road geometry, step 120 may determine the upcoming driving maneuver of bus 220 in a variety of ways and may to this end include any one of steps 121 to 128, which will be discussed in the following with reference to bus 220 as illustrated in Figs. 2A to 5B. It will be understood that the determination of the upcoming driving maneuver of bus 220 as shown in Figs. 2A to 5B and as discussed with regard to steps 121 to 128 is provided merely as examples of the determination of the upcoming driving maneuver of bus 220 and not to limit the determination to these examples.

If method 100 has detected bus 220 in a travel lane and in front of vehicle 210 in step 110, as illustrated in Figs. 2A to 2D, method 100 may determine the upcoming driving maneuver of bus 220 as illustrated by steps 121 to 123. The expression travel lane refers to the lane vehicle 210 is driving along, such as lane 250 in the direction of travel of vehicle 210 as illustrated throughout Figs. 2A to 5B.

In step 121, method 100 may detect a bus stop, such as bus stop 240 shown in Figs. 2A to 3, based on one or more of the automotive sensor data, the bus data and/or the map data. That is, bus stop 240 may be detected based on either one of the automotive sensor data, the bus data or the map data alone or in combination. For example, bus stop 240 may be detected by detecting a bus stop sign within auto-motive sensor data. To verify the accuracy of detecting bus top 240 based on the automotive sensor data, detected bus stop 240 may be verified against the bus data and in particular the bus scheduling data based on the position of vehicle 210, as the bus data and the bus scheduling data may respectively indicate the positions of bus stops of a given transport agency. Such a verification may in particular be helpful if a given bus stop has been temporarily or permanently moved or canceled. The same verification may also be performed based on the map data in addition to or instead of the bus data. Performing the verification of a bus stop detected based on the automotive sensor data based on both the map data and the bus data may further enhance the reliability of the bus stop detection. In a further example, bus stop 240 may be detected based on the position of vehicle 210, the bus data and/or the map data and may be verified using the automotive sensor data and the map data or the bus data. For example, if a bus stop has been temporarily moved due to construction, such as by 25m or 50m, such a move may not be correctly reflected in the bus data and/or the map data.

If a bus stop has been detected in step 121, method 100 may in step 122 determine a stopping probability of bus 220 based on one or more of the automotive sensor data and the bus data. For example, the automotive sensor data may indicate that bus 220 is decelerating, that the brake lights of bus 220 are illuminated, that the hazard warning signal of bus 240 has been activated and/or that a turn indicator pointing toward the side of the road of bus stop 240 has been activated. In such a case, the stopping probability of bus 220 is determined to be high, e.g. 1 on a scale from 0 to 1. In a further example, the stopping probability may be determined based on the bus data, the current time, the position of vehicle 210 and/ or the line number of bus 210 derived in step 111. If for example the bus data indicate that a bus of the line number associated with bus 210 is currently scheduled to be arriving at bus stop 240, the stopping probability of bus 220 is determined to be high. The determination of the stopping probability may also be based on both the automotive sensor data and the bus data, i.e. the examples above may be combined, e.g. to increase the reliability of the determination of the stopping probability.

Based on the stopping probability determined in step 122, method 100 may proceed in step 123 to determine the upcoming driving maneuver of bus 220 to be a stopping maneuver at bus stop 240. That is, if the stopping probability is determined to be high, method 100 assumes that the upcoming driving maneuver of bus 220 is a stopping maneuver 281, as illustrated by the stop sign in front of bus 220 in Figs. 2A to 2C.

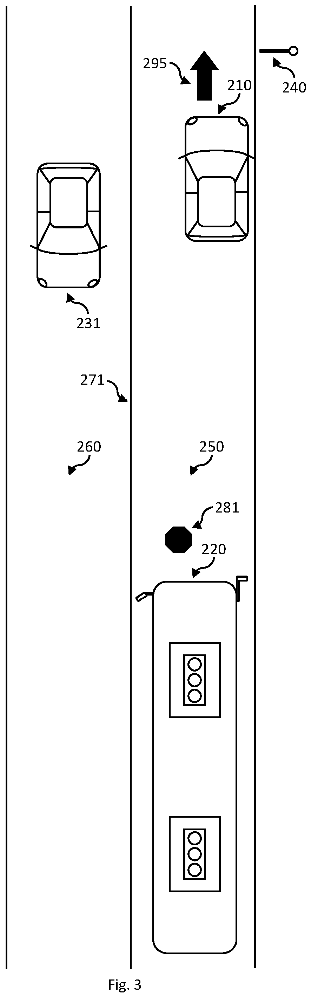

If method 100 has detected bus 220 in travel lane 250 and behind vehicle 210, as illustrated in Fig. 3, method 100 may determine the upcoming driving maneuver of bus 220 as illustrated by steps 124, 125 and 123.

In step 124, method 100 may detect if vehicle 210 has stopped at bus stop 240 based on one or more of the automotive sensor data, the bus data and/or the map data. As step 124 entails the detection of bus stop 240, which corresponds to step 123 discussed above with the difference being that vehicle 210 has stopped, as illustrated in Fig. 3 by vehicle 210 being parked against the curb, step 124 may essentially be performed as step 123 discussed above. Whether vehicle 210 has been stopped may e.g. detected by the acceleration of vehicle 210 corresponding to approximately $0\frac{m}{s^2}$.

If bus stop 240 has been detected in step 124, method 100 may proceed in step 125 to determine a stopping probability of bus 220 based on one or more of the automotive sensor data and the bus data. Step 124 corresponds to step 122 discussed above and may thus be performed as discussed with regard to step 122. Accordingly, method 100 may proceed to step 123 following step 124 in order to determine the upcoming driving maneuver of bus 220 to be stopping maneuver 281, as illustrated by the stop sign in front of bus 220 in Figs. 3.

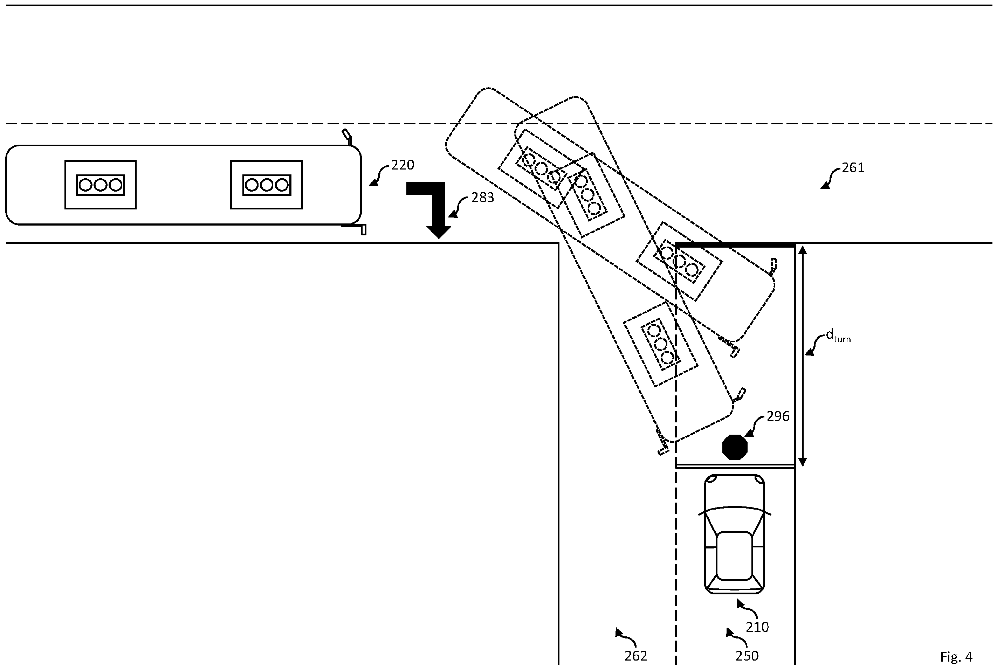

If method 100 has detected bus 220 in step 110 in a lane intersecting travel lane 250 of vehicle 210, as illustrated by intersecting lane 261 in Fig. 4, method 100 may determine the upcoming driving maneuver of bus 220 as illustrated by steps 126 and 127.

In step 126, method 100 may determine a turn probability of bus 220, which may be indicative of a probability of bus 220 turning onto a lane adjacent to travel lane 250 of vehicle 210, such as adjacent lane 262 in Fig. 4, based on one or more of the automotive sensor data and the bus data. For example, if the automotive sensor data are indicative of bus 210 slowing down in front of an intersection or of an activated turn indicator of bus 220 indicating a turn onto adjacent lane 262, the turn probability may be determined to be indicative of a turn, e.g. the turn probability may be determined to be high, such as close to 1 if the turn probability is expressed on a scale from 0 to 1 with 1 being the highest value. In a further example, if the bus data indicate e.g. based on a current time, a current position of vehicle 210 and/or a line number of bus 210 derived in step 111 that a bus should momentarily be turning onto adjacent lane 262, the turn probability may be determined to indicative of a turn. Both approaches may also be used concurrently to increase the reliability of the determination of the turn probability in step 126.

Based on the turn probability determined in step 126, i.e. if in step 126 the turn probability is determined to be indicative of a turn, method 100 may in step 127 proceed to determine the upcoming driving maneuver of the bus to be a turn maneuver 283, as indicated by the arrow in front of bus 220 in Fig. 4.

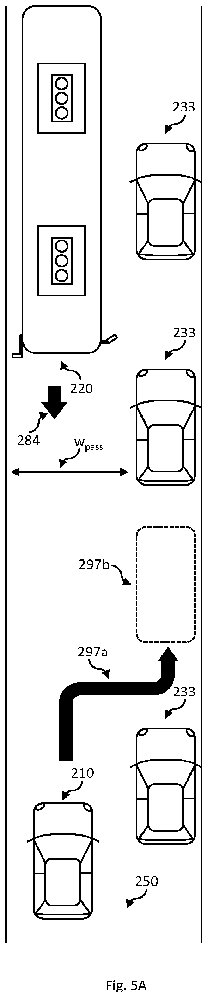

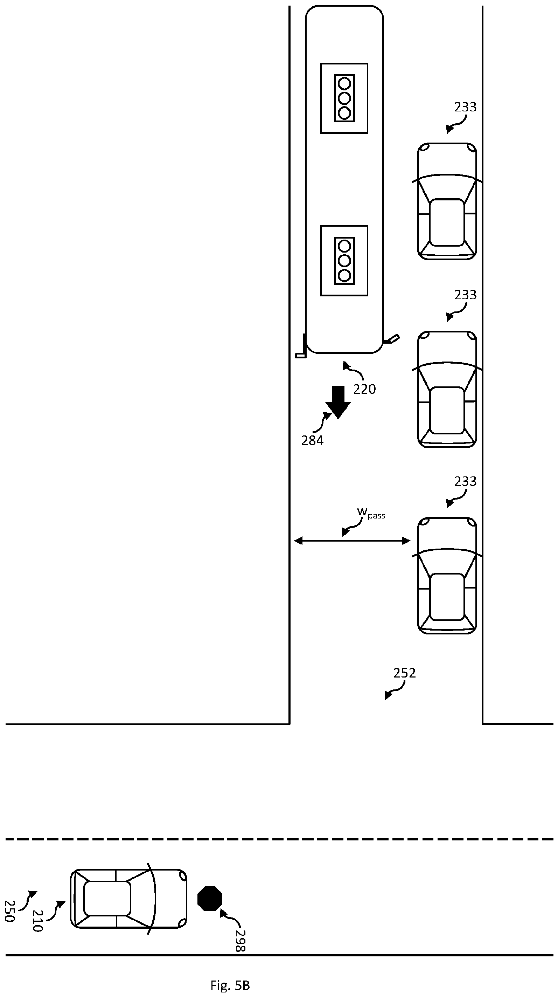

If method 100 has detected bus 220 in step 110 to be approaching vehicle 210, i.e. driving toward and in the opposite direction of vehicle 210 as illustrated in Figs. 5A and 5B, method 100 may in step 128 determine the upcoming driving maneuver of bus 220 to be an approach maneuver 284 toward vehicle 210.

In step 130, method 100 determines the bus-aligned maneuver based on the upcoming driving maneuver of bus 220 determined in steps 120 to 128.

As in the case of the determination of the upcoming maneuver of bus 210, the determination of the bus-aligned maneuver may depend on a variety of aspects, including a road layout, a bus stop position and/or a road geometry. Accordingly, the bus-aligned maneuver may be determined in a plurality of ways, such as steps 131 to 137f, which will be discussed as examples of the determination of the bus-aligned maneuver with regard to Figs. 2A to 5B. It will be understood that the determination of the bus-aligned maneuver as shown in Figs. 2A to 5B and as to be discussed with regard to steps 131 to 137f is provided merely as examples of the determination of the bus-aligned maneuver and not to limit the determination thereof to these examples.

As steps 131 to 137f may be based on steps 121 to 128, the connection between these steps is indicated in Figs. 1A and 1B based on a trapezoid, a pentagon and an octagon, respectively. The trapezoid indicates the exemplary bus-aligned maneuvers and corresponding steps associated with the determination of stopping maneuver 281 in step 123. The pentagon indicates the exemplary bus-aligned maneuvers and corresponding steps associated with the determination of turn maneuver 283 in step 127. The octagon indicates the exemplary bus-aligned maneuvers and corresponding method steps associated with the determination of approach maneuver 284.

If method 100 in step 120 determines the upcoming driving maneuver of bus 220 to be stopping maneuver 281, method 100 may in step 130 determine the bus-aligned maneuver as discussed in the following with regard to steps 131 to 135 and Figs. 2A to 3.

In step 131, which is illustrated in Fig. 2A, method 100 may determine the bus-aligned maneuver to be a stopping maneuver 291 behind bus 220, as illustrated by stop sign 291 in front of vehicle 220. The example of step 131 may be considered the case of waiting until bus 210 has completed the stop at bus stop 240, e.g. because a lane separation line, such as non-pass permitting lane separation line 271 in Fig. 2A, does not allow overtaking bus 220 while stopped at bus stop 240 or because oncoming traffic, such as oncoming vehicle 231 in Fig. 2A, renders overtaking bus 220 impossible. In other words, in step 131 the bus aligned maneuver of vehicle 220 corresponds to copying the upcoming driving maneuver of bus 220 at bus stop 240. Non-pass permitting lane separation line 271 may e.g. be detected based on the automotive sensor data or based on the map data, which may indicate traffic regulations in force for vehicles at a given position. Oncoming vehicle 231 may e.g. be detected based on the automotive sensor data.

In step 132a, which is illustrated in Fig. 2B, method 100 may detect adjacent lane 260 in a direction opposite to the direction of travel of vehicle 210 and thus in the opposite direction of travel lane 250 and pass-permitting lane separation line 272 based the on automotive sensor data and/or the map data. If pass-permitting lane separation line 272 has been detected in step 132a, method 100 may proceed to determine the bus-aligned maneuver to be an overtaking maneuver 292, as illustrated in Fig. 2B. Put differently, steps 132a and 132b correspond to a situation in which vehicle 210 may be able to overtake bus 2120 while stopped at bus stop 240 using adjacent lane 260 dedicated to oncoming traffic as permitted by pass-permitting lane separation line 272.

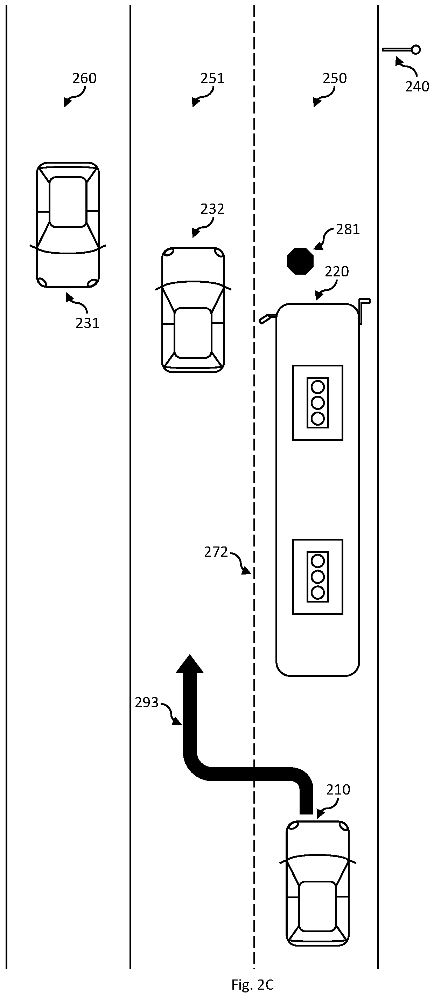

In step 133a, which is illustrated in Fig. 2C, method 100 may detect further lane 251 in a direction of travel of vehicle 210. Further lane 251 may e.g. be detected using the automotive sensor data and/or the map data. If further lane 251 has been detected in step 133a, method 100 may in step 133b determine the bus-aligned maneuver to be lane change maneuver 293 illustrated in Fig. 2C. Accordingly, steps 133a and 133b correspond to a situation in which vehicle 210 may overtake bus 220 by using further lane 251 dedicated to traffic driving in the same direction as vehicle 210, i.e. vehicle lane change maneuver 293 need not cause vehicle 210 to return to travel lane 250 as opposed to overtaking maneuver 292.

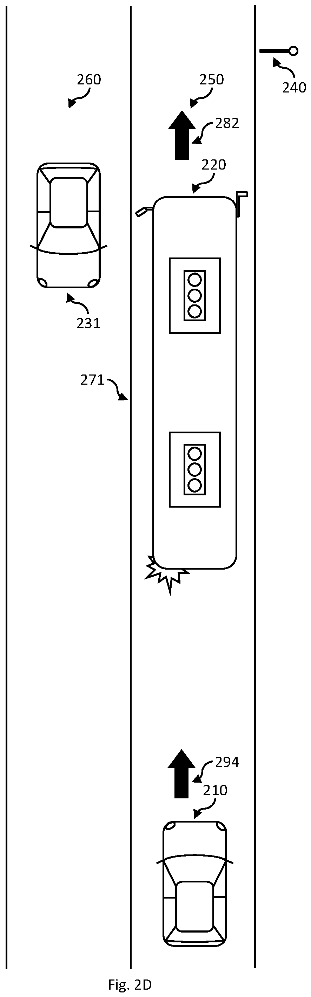

In step 134a, which is illustrated in Fig. 2D, method 100 may detect an activated turn indicator of the bus which points in the opposite direction of the bus stop 240. If the activated turn indicator has been detected in step 134a, method 100 may in step 134b determine the bus-aligned maneuver to be following maneuver 294 illustrated in Fig. 2D. That is, step 134a determines, following an original determination in step 120 that bus 220 is about to perform stopping maneuver 281, that bus 220 indicates a drive-ahead maneuver 284, e.g. because nobody is waiting at bus stop 240 and nobody intends to get off at bus stop 240 and thus step 134b determines the bus-aligned maneuver to be to follow bus 210 as stopping or overtaking is not necessary as opposed to the cases of Figs. 2A to 2C.

In step 135, which is illustrated in Fig. 3, method 100 may determine the bus-aligned maneuver to be a drive-away maneuver 295 if bus 220 has been detected in step 110 to be approaching vehicle 210 from behind and if the upcoming driving maneuver of bus 220 has been determined to be stopping maneuver 281 at bus stop 240. That is, method 100 may determine in step 135 that vehicle 210 should move away from bus stop 240, at which vehicle 210 has temporarily stopped, e.g. to let off a passenger, because bus 220 is about to stop at bus stop 240.

If method 100 in step 120 determines the upcoming driving maneuver of bus 220 to be turning maneuver 283, method 100 may in step 130 determine the bus-aligned maneuver as discussed in the following with regard to steps 136a to 136c and Fig. 4.

In step 136b, which is illustrated in Fig. 4, method 100 may determine a turn-enabling distance $d_{turn}$. The turn-enabling distance $d_{turn}$ may correspond to a distance from an intersection of travel lane 250 of vehicle 210 and intersecting lane 261, which bus 220 enters during turning maneuver 283, as illustrated in Fig. 4 based on dotted representations of bus 220 during turning maneuver 283, which enter travel lane 250, and the holding line on travel lane 250 displaced by turn-enabling distance $d_{turn}$. Turn-enabling distance $d_{turn}$ may generally be determined based on automotive sensor data and in particular based on deriving a length of bus 220 and a geometry of the intersection from the automotive sensor data. In some examples of the present disclosure, turn-enabling distance $d_{turn}$ may be determined based on a turn radius of bus 210, to which end method 100 may in a step 136a estimate a turn radius of the bus. The turn radius may e.g. be estimated based on identifying, within the automotive sensor data, a length of bus 220, a turning maneuver initiation point, a velocity of bus 220 and/or a yaw rate of bus 220, which may be used in any combination to derive the turn radius of bus 220.

Based on turn-enabling distance $d_{turn}$, method 100 may in step 136c determine the bus-aligned maneuver to be stopping maneuver 296 as illustrated in Fig.4, which causes vehicle 210 to stop turn-enabling distance $d_{turn}$ away from the intersection instead of at the intersection, as illustrated by the displaced holding line in Fig. 4 discussed above.

If method 100 in step 120 determines the upcoming driving maneuver of bus 220 to be approach maneuver 284, method 100 may in step 130 determine the bus-aligned maneuver as discussed in the following with regard to steps 137a to 137f as well as Figs. 5A to 5B.

In step 137a, method 100 may calculate a passable width $w_{pass}$ of a road. The road generally refers to a lane on which vehicle 210 and bus 220 will pass each other, which in the context of Figs. 5A and 5B may e.g. be travel lane 250 or upcoming lane 252, which may be a lane vehicle 210 is about to turn onto. Passable width $w_{pass}$ may be calculated based on road features derived from the automotive sensor data, such as lane markings, curbs, parked vehicles, such as parked vehicles 233 shown in Figs. 5A and 5B and/or other aspects of the driving environment of vehicle 210. The passable width $w_{pass}$ may also be calculated based on the map data if the map data include information indicative of lane widths and potentially parking restrictions.

Based on the calculation of passable width $w_{pass}$, method 100 may proceed in step 137b to evaluate whether passable width $w_{pass}$ is less than a sum of a width of bus 220, a width of vehicle 210 and a safety margin. That is, based on the passable width $w_{pass}$ method 100 evaluates whether vehicle 210 and oncoming bus 220 may pass each other on the road without colliding, as illustrated in Figs. 5A and 5B. To this end, the passable width $w_{pass}$ should be larger than the sum of the width of bus 220, the width of vehicle 210 and the safety margin. The safety margin may correspond to a distance at which vehicle 210 and bus 220 should at a minimum drive by one another safely. The safety margin may be a fixed safety margin, such as 0.25m, 0.5m or 1 m or may be a dynamic safety margin, e.g. based on road conditions, the weather, visibility or any other factor which may impact the distance deemed safe for vehicle 210 and bus 220 to pass one another. Accordingly, the safety margin may, as the width of bus 220, be derived from the automotive sensor data.

If passable width $w_{pass}$ is evaluated to be less than the sum of the width of bus 220, the width of vehicle 210 and the safety margin, method 100 may proceed depending on whether vehicle 210 is already on the road which bus 220 drives along or is about to turn onto the road which bus 220 drives along. If vehicle 210 is already on the road which bus 220 is driving along, i.e. if vehicle 210 and bus 220 are both on travel lane 250, method 100 may proceed to steps 137c and 137d as illustrated in Fig. 5A. If vehicle 210 is about to turn onto the road which bus 220 is driving along, i.e. if bus 220 is driving along upcoming lane 252, method 100 may proceed to steps 137e and 137f as illustrated in Fig. 5B.

If vehicle 210 and bus 220 are both one travel lane 250, method 100 may in step 137c determine a pass-enabling position 297b. Pass-enabling position 297b may be a position adjacent to and/or on a curb of the road, which increases passable width $w_{pass}$ above the sum of the width of bus 220, the width of vehicle 210 and the safety margin. Pass-enabling position 297b may e.g. be determined based on the road geometry and road users present on the travel lane 250 as derived from the automotive sensor data. In Fig. 5A, passable width $w_{pass}$ is shown to be the distance of travel lane 250 to the left of parked vehicles 233. In this context, pass-enabling position 297b is illustrated as a spot between parked vehicles 233 which increases passable width $w_{pass}$ to the entire width of travel lane 250 of Fig. 5A. Following the determination of pass-enabling position 297b, method 100 may then in step 137d proceed to determine the bus-aligned maneuver to be driving maneuver 297a toward pass-enabling position 297b, as illustrated in Fig. 5A by the arrow pointing toward pass-enabling position 297a.

If vehicle 210 and bus 220 are about to pass each other on upcoming lane 252, method 100 in step 137e may determine a stopping position, which may be a position in front of an intersection of travel lane 250 and upcoming lane 252, as illustrated by stop sign 298 in Fig. 5B. It will be understood that the determination of the stopping position in step 137e may take into account or include steps 136a to 136c, i.e. the determination of turn-enabling distance $d_{turn}$ discussed above and as illustrated in Fig. 4. Based on the stopping position determined in step 137e, method 100 may in step 137f determine the bus-aligned maneuver to be driving maneuver 298 to the stopping position.

Finally, method 100 causes vehicle 210 to perform the bus-aligned maneuver determined in steps 131 to 137e. That is, method 100 may directly control vehicle 210 laterally and longitudinally in accordance with the determined bus-aligned maneuver or may indirectly control vehicle 210 laterally and longitudinally by providing the determined bus-aligned maneuver to a driving automation system feature configured to directly control vehicle 210.

In summary, method 100 provides a determination of driving maneuvers of vehicle 210, which are aligned with driving maneuvers of buses vehicle 210 may encounter while driving in order to enable safe interaction of vehicle 210 with buses and in order to facilitate the movement of buses, in particular in inner city environments.

Fig. 7 shows automotive control unit 300 configured to perform method 100, which may also be referred to as an electronic control unit (ECU). Automotive control unit 300 may include a processor 310, a graphics processing unit (GPU) 320, automotive processing system 330, a memory 340, a removable storage 350, a storage 360, a cellular interface 370, a global navigation satellite system (GNSS) interface 380 and a communication interface 390.

Processor 310 may be any kind of single-core or multi-core processing unit employing a reduced instruction set (RISC) or a complex instruction set (CISC). Exemplary RISC processing units include ARM based cores or RISC V based cores. Exemplary CISC processing units include x86 based cores or x86-64 based cores. Processor 310 may perform instructions causing automotive control unit 110 to perform method 400. Processor 310 may be directly coupled to any of the components of automotive control unit 310 or may be directly coupled to memory 340, GPU 320 and device bus 300B.

GPU 320 may be any kind of processing unit optimized for processing graphics related instructions or more generally for parallel processing of instructions. As such, GPU 320 may be configured to generate a display of information, such as information relating to one or more driving automation system features or telemetry data, to a driver of the vehicle, e.g. via a head-up display (HUD) or a display arranged within the view of the driver. GPU 320 may be coupled to the HUD and/or the display via connection 320C. GPU 320 may further perform at least a part of method 100 to enable fast parallel processing of instructions relating to method 100. It should be noted that in some embodiments, processor 310 may determine that GPU 320 need not perform instructions relating to method 100. GPU 320 may be directly coupled to any of the components of automotive control unit 310 or may be directly coupled to processor 310 and memory 340. In some embodiments, GPU 320 may also be coupled to the device bus.

Automotive processing system 330 may be any kind of system-on chip configured to provide trillions of operations per second (TOPS) e.g. in order to enable automotive control unit 300 to perform one or more driving automation system features while driving, such as the driving automation system feature determining and performing the bus-aligned maneuvers. Automotive processing system 330 may only interface with processor 310 or may interface with other devices via the system bus.

Memory 340 may be any kind of fast storage enabling processor 310, GPU 320 and automotive processing system 330 to store instructions for fast retrieval during processing of instructions as well as to cache and buffer data. Memory 340 may be a unified memory coupled to processor 310, GPU 320 and automotive processing system 330 in order to enable allocation of memory 340 to processor 310, GPU 320 and automotive processing system 330 as needed. Alternatively, processor 310, GPU 320 and auto-motive processing system 330 may be coupled to separate processor memory 340a, GPU memory 340b and automotive processing system memory 340c.

Removable storage 350 may be a storage device which can be removably coupled with automotive control unit 350. Examples include a digital versatile disc (DVD), a compact disc (CD), a Universal Serial Bus (USB) storage device, such as an external SSD, or a magnetic tape. It should be noted that removable storage 350 may store data, such as instructions of method 100 and/internal as well as further motion parameter indicators and associated time stamps or may be omitted.

Storage 360 may be a storage device enabling storage of program instructions and other data. For example, storage 360 may be a hard disk drive (HDD), a solid state disk (SSD) or some other type of nonvolatile memory. Storage 360 may for example store the instructions of method 100.

Removable Storage 350 and storage 360 may be coupled to processor 310 via system bus 310B. System bus 310B may be any kind of bus system enabling processor 310 and optionally GPU 320 as well as automotive processing system 330 to communicate with the other devices of automotive control unit 300. The system bus may for example be a Peripheral Component Interconnect express (PCIe) bus or a Serial AT Attachment (SATA) bus.

Cellular interface 370 may be any kind of interface enabling automotive control unit 300 to communicate via a cellular network, such as a 4G network or a 5G network, e.g. with vehicles 230 to 233, bus and 220.

GNSS interface 380 may be any kind of interface enabling automotive control unit 300 to receive positional data provided by a satellite network, such as the Global Positioning System (GPS), the Global Navigation Satellite System (GLONASS) or Galileo.

Communications interface 390 may enable automotive control unit 300 to interface with external devices, either directly or via network, via a connection as illustrated by the line coupling communications interface 390 to the outside of automotive control unit 300. Communications interface 390 may for example enable automotive control unit 300 to couple to a wired or wireless network, such as Ethernet, Wifi, a Controller Area Network (CAN) bus or any bus system appropriate for communication in vehicles. For example, automotive control unit 300 may be coupled to vehicles 230 to 233, bus 220 and/or data sources via communications interface 390. Communications interface 390 may also include a USB port or a serial port to enable direct communication with an external device.

Automotive control unit 300 may be integrated with vehicle 210, e.g. beneath the cabin, under the dashboard or in the trunk of vehicle 210.

It will be understood that automotive control unit 300 may include further or fewer elements than shown in Fig. 4, as required by the actual implementation of automotive control unit 300. Further, the above discussed elements may be distributed across multiple (sub) units. Further, it will be understood that automotive control unit 300 may also be included in bus 220 or in any other vehicle shown throughout the figures.

The invention may further be illustrated by the following examples.

In an example, a method for performing a bus-aligned maneuver by a driving automation system feature of a vehicle, the bus-aligned maneuver being aligned with an upcoming driving maneuver of a bus, comprises: detecting a bus in a vicinity of the vehicle at least based on automotive sensor data captured by one or more automotive sensors of the vehicle, determining the upcoming driving maneuver of the detected bus based on one or more of the automotive sensor data, bus data and/or map data, determining the bus-aligned maneuver based on the upcoming driving maneuver of the detect-ed bus and causing the vehicle to perform the bus-aligned maneuver.

In an example, the bus data may include bus scheduling data and current bus data, wherein the bus scheduling data are indicative of one or more bus lines, and the current bus data may be indicative of one or more current positions of one or more buses.

In the example method, the detecting the bus may include deriving a line number of the bus, wherein the line number may be derived from the automotive sensor data if a line number display is detected on the bus and a position of the vehicle and the bus data if the line number display is not detected on the bus.

In the example method, the detecting the bus may include deriving a position of the bus based on the bus data and/or the map data.

In the example method, the determining the upcoming driving maneuver of the bus may include, if the bus has been detected in a same lane and in front of the vehicle, detecting a bus stop based on one or more of the automotive sensor data, the bus data and/or the map data, if a bus stop has been detected, determining a stopping probability of the bus based on one or more of the automotive sensor data and the bus data, and determining the upcoming driving maneuver of the bus to be a stopping maneuver at the bus stop based on the stopping probability.

In the example method, the determining the bus-aligned maneuver may include detecting a further lane in a direction of travel of the vehicle, detecting an adjacent lane in a direction opposite to the direction of travel of the vehicle and a pass-permitting lane separation line, detecting an activated turn indicator of the bus, the activated turn indicator pointing in the opposite direction of the bus stop, determining the bus-aligned maneuver to be a stopping maneuver behind the bus, if the further lane has been detected, determining the bus-aligned maneuver to be a lane change maneuver, if the pass-permitting lane separation line has been detected, determining the bus-aligned maneuver to be an overtaking maneuver, and if the activated turn indicator has been detected, determining the bus-aligned maneuver to be a following maneuver.

In the example method, the determining the upcoming driving maneuver of the bus may include, if a bus has been detected in a same lane and behind the vehicle and if the vehicle has stopped, detecting if the vehicle has stopped at a bus stop based on one or more of the auto-motive sensor data, the bus data and/or the map data, if a bus stop has been detected, determining a stopping probability of the bus based on one or more of the automotive sensor data and the bus data and determining the upcoming driving maneuver of the bus to be a stopping maneuver at the bus stop based on the stopping probability, and the determining the bus-aligned maneuver may include determining the bus-aligned maneuver to be a drive-away maneuver.

In the example method, the determining the upcoming driving maneuver of the bus may include, if the bus has been detected in a lane intersecting a lane of travel of the vehicle, determining a turn probability of the bus based on one or more of the automotive sensor data and the bus data, the turn probability being indicative of a probability of the bus turning onto a lane adjacent to the travel lane of the vehicle; determining the upcoming driving maneuver of the bus to be a turn maneuver based on the turn probability.

In the example method, the determining the bus-aligned maneuver may include determining a turn-enabling distance based on the turn radius, the turn-enabling distance corresponding to a distance from an intersection of the travel lane of the vehicle and the intersecting lane entered by the bus, and determining the bus-aligned maneuver to be a maneuver stopping the vehicle the turn-enabling distance away from the intersection.

In the example method, the determining the upcoming driving maneuver of the bus may include determining the upcoming driving maneuver of the bus to be an approach maneuver toward the vehicle, the determining the bus-aligned maneuver may include, if the upcoming driving maneuver of the bus has been determined to be the approach maneuver toward the vehicle, calculating a passable width of a road on which the vehicle and the bus will pass each other, wherein the road is one of a travel lane of the vehicle and an up-coming lane, the upcoming lane being a lane the vehicle is about to turn onto, if the passable width is less than a sum of a width of the bus, a width of the vehicle and a safety margin, if the vehicle is already on the road, determining a pass-enabling position, the pass-enabling position being a position adjacent to and/or on a curb of the road increasing the passable width above the sum of the width of the bus, the width of the vehicle and the safety margin, and determining the bus-aligned maneuver to be a driving maneuver toward the pass-enabling position, and if the vehicle is about to turn on the road, determining a stopping position, the stopping position being a position in front of an intersection of the travel lane of the vehicle and the upcoming lane, determining the bus-aligned maneuver to be a stopping maneuver at the stopping position.

In an example, the automotive control unit comprises at least one processing unit and a memory coupled to the at least one processing unit and configured to store machine-readable instructions, wherein the machine-readable instructions cause the at least one processing unit to detect a bus in a vicinity of the vehicle at least based on automotive sensor data captured by one or more automotive sensors of the vehicle, determine the upcoming driving maneuver of the bus based on one or more of the automotive sensor data, bus data and/or map data, determine the bus-aligned maneuver based on the upcoming driving maneuver, and cause the vehicle to perform the bus-aligned maneuver.

In the example automotive control unit, the machine-readable instructions may further cause the at least one processing unit to perform any one of the above example methods.

In an example, a vehicle comprises the above example automotive control unit.

The preceding description has been provided to illustrate a method and a system for performing a bus-aligned maneuver by a driving automation system feature of a vehicle. It should be understood that the description is in no way meant to limit the scope of the present disclosure to the precise embodiments discussed throughout the description. Rather, the person skilled in the art will be aware that the examples of the present disclosure may be combined, modified or condensed without departing from the scope of the present disclosure as defined by the following claims.

### List of Reference Signs

| | |
|---|---|
| 100 - 140 | method and method steps |
| 210 | vehicle |
| 211 | automotive sensor |
| 220 | bus |
| 231 | oncoming vehicle |
| 232 | further vehicle (in the direction of travel of vehicle 210) |
| 233 | parked vehicle |

| 240 | bus stop |
| 250 | travel lane / lane in the direction of travel (of vehicle 210) |
| 251 | further lane in the direction of travel (of vehicle 210) |
| 252 | upcoming lane |
| 260 | opposite lane |
| 261 | intersecting lane |
| 262 | adjacent lane |
| 271 | solid line / pass-permitting lane marking |
| 272 | broken line / non-pass-permitting lane marking |
| 281 - 284 | upcoming driving maneuver |
| 291 - 298 | bus-aligned maneuver |
| $d_{turn}$ | turn-enabling distance |
| $w_{pass}$ | passable width |
| 300 | automotive control unit |
| 300B | bus |
| 310 | CPU |
| 320 | GPU |
| 320c | connection |
| 330 | automotive processing system |
| 340 | memory |
| 350 | removable storage |
| 360 | storage |
| 370 | cellular interface |
| 380 | GNSS interface |
| 390 | communications interface |

**Claims**

1. Method (100) for performing a bus-aligned maneuver (291 - 298) by a driving automation system feature of a vehicle (210), the bus-aligned maneuver (291 - 298) being aligned with an upcoming driving maneuver (281 - 284) of a bus (220), comprising:

    detecting (110) the bus (220) in a vicinity of the vehicle (210) at least based on automotive sensor data captured by one or more automotive sensors (211) of the vehicle (210);
    determining (120) the upcoming driving maneuver (281 - 284) of the detected bus (220) based on one or more of the automotive sensor data, bus data and/or map data;
    determining (130) the bus-aligned maneuver (291 - 298) based on the upcoming driving maneuver (281 - 284) of the detected bus (220); and
    causing (140) the vehicle (210) to perform the bus-aligned maneuver (291 - 298).

2. The method (100) of claim 1, wherein the bus data include bus scheduling data and current bus data, wherein:

    the bus scheduling data are indicative of one or more bus lines, and
    the current bus data are indicative of one or more current positions of one or more buses.

3. The method (100) of any one of the preceding claims, wherein the detecting (110) the bus (220) includes deriving a line number of the bus (220), wherein the line number is derived from:

    the automotive sensor data if a line number display is detected on the bus (220), and
    a position of the vehicle (210) and the bus data if the line number display is not detected on the bus (220).

4. The method (100) of any one of the preceding claims, wherein the detecting (110) the bus (220) includes deriving (112) a position of the bus (220) based on the bus data and/or the map data.

5. The method (100) of any one of the preceding claims, wherein the determining (120) the up-coming driving maneuver (281 - 284) of the detected bus (220) includes:

    if the bus (220) has been detected in a travel lane (250) and in front of the vehicle (210), detecting (121) a bus stop (240) based on one or more of the automotive sensor data, the bus data and/or the map data;
    if a bus stop (240) has been detected, determining (122) a stopping probability of the bus (220) based on one or more of the automotive sensor data and the bus data; and
    determining (123) the upcoming driving maneuver of the bus to be a stopping maneuver (281) at the bus stop (240) based on the stopping probability.

6. The method (100) of claim 5, wherein the determining (130) the bus-aligned maneuver includes:

    detecting (133a) a further lane (251) in a direction of travel of the vehicle (210);
    detecting (132a) an adjacent lane (260) in a direction opposite to the direction of travel of the vehicle (210) and a pass-permitting lane separation line (272);
    detecting (134a) an activated turn indicator of the bus (220), the activated turn indicator pointing in the opposite direction of the bus stop (240);
    determining (131) the bus-aligned maneuver (291 - 298) to be a stopping maneuver (291) behind the bus (220);
    if the further lane (251) has been detected, determining (133b) the bus-aligned maneuver (291 - 298) to be a lane change maneuver (293);
    if the pass-permitting lane separation line (272) has been detected, determining (132b) the bus-aligned maneuver (291 - 298) to be an overtaking maneuver (292); and
if the activated turn indicator has been detected, determining (134b) the bus-aligned maneuver (291 - 298) to be a following maneuver (294).

**7.** The method (100) of any one of the preceding claims, wherein:

the determining (120) the upcoming driving maneuver (291 - 293) of the bus (220) includes:

if the bus (220) has been detected in a travel lane (250) and behind the vehicle (210) and if the vehicle (220) has stopped, detecting (124) if the vehicle (210) has stopped at a bus stop (240) based on one or more of the automotive sensor data, the bus data and/or the map data;
if a bus stop (240) has been detected, determining (125) a stopping probability of the bus (220) based on one or more of the automotive sensor data and the bus data; and
determining (123) the upcoming driving maneuver (281 - 284) of the bus (220) to be a stopping maneuver (281) at the bus stop (240) based on the stopping probability, and

the determining (130) the bus-aligned maneuver (291 - 298) includes determining (135) the bus-aligned maneuver to be a drive-away maneuver (295).

**8.** The method (100) of any one of the preceding claims, wherein the determining (120) the up-coming driving maneuver of the bus (220) includes:

if the bus (220) has been detected in a lane (261) intersecting a travel lane (250) of the vehicle (210), determining (126) a turn probability of the bus (220) based on one or more of the automotive sensor data and the bus data, the turn probability being indicative of a probability of the bus (220) turning onto a lane (262) adjacent to the travel lane (250) of the vehicle (220);
determining (127) the upcoming driving maneuver (281 - 284) of the bus (220) to be a turn maneuver (283) based on the turn probability.

**9.** The method (100) of claim 8, wherein the determining (130) the bus-aligned maneuver (291 - 298) includes:

determining (136b) a turn-enabling distance $(d_{turn})$, the turn-enabling distance $(d_{turn})$ corre-

sponding to a distance from an intersection of the travel lane (250) of the vehicle (210) and the intersecting lane entered by the bus (220); and determining (136c) the bus-aligned maneuver (291 - 298) to be a stopping maneuver (296) stopping the vehicle (210) the turn-enabling distance $(d_{turn})$ away from the intersection.

**10.** The method (100) of any one of the preceding claims, wherein:

the determining (120) the upcoming driving maneuver (281 - 284) of the bus (220) includes determining (128) the upcoming driving maneuver (281 - 284) of the bus (220) to be an approach maneuver (284) toward the vehicle (210); and
the determining (130) the bus-aligned maneuver (291 - 298) includes:

if the upcoming driving maneuver (281 - 284) of the bus (220) has been determined to be the approach maneuver (284) toward the vehicle (210), calculating (137a) a passable width $(w_{pass})$ of a road on which the vehicle (210) and the bus (220) will pass each other, wherein the road (250, 252) is one of a travel lane (250) of the vehicle (210) and an upcoming lane (252), the upcoming lane (252) being a lane the vehicle (210) is about to turn onto;
if (137b) the passable width $(w_{pass})$ is less than a sum of a width of the bus (220), a width of the vehicle (210) and a safety margin:

if the vehicle (210) is already on the road (250, 252):

determining (137c) a pass-enabling position (297b), the pass-enabling position (297b) being a position adjacent to and/or on a curb of the road (250, 252) increasing the passable width above the sum of the width of the bus (220), the width of the vehicle (210) and the safety margin; and
determining (137d) the bus-aligned maneuver (291 - 298) to be a driving maneuver (297a) toward the pass-enabling position (297b); and

if the vehicle (210) is about to turn on the road (250, 252):

determining (137e) a stopping position, the stopping position being a position in front of an intersection of a travel lane (250) of the vehicle and the upcoming lane (252); and determining (137f) the bus-aligned maneuver to be a stopping maneuver (298) at the stopping position.

11. An automotive control unit (300), comprising:

at least one processing unit (310, 320, 330); and a memory (350, 350) coupled to the at least one processing unit (310, 320, 330) and configured to store machine-readable instructions, wherein the machine-readable instructions cause the at least one processing unit (310, 320, 330) to:

detect a bus (220) in a vicinity of a vehicle (210) at least based on automotive sensor data captured by one or more automotive sensors (211) of the vehicle (210); determine an upcoming driving maneuver (281 - 284) of the detected bus (220) based on one or more of the automotive sensor data, bus data and/or map data; determine (130) a bus-aligned maneuver (291 - 298) based on the upcoming driving maneuver (281 - 284) of the detected bus (220), the bus-aligned maneuver (291 - 298) being aligned with the upcoming driving maneuver (281 - 284) of the bus (220); and cause the vehicle (210) to perform the bus-aligned maneuver (291 - 298).

12. The automotive control unit (300) of claim 11, wherein the machine-readable instructions further cause the at least one processing unit (310, 320, 330) to perform the method of any one of claims 2 to 10.

13. A vehicle (210) comprising the automotive control unit (300) of any one of claims 11 and 12.

110

detect a bus in a vici-
nity of the vehicle

111

derive a line num-
ber of the bus

112

deriving a positi-
on of the bus

120

determine the upcoming driving maneuver of the bus

121

detect a bus stop
if the bus has
been detected in
a same lane and
in front of the
vehicle

122

determine a stop-
ping probability of
the bus if a bus
stop has been
detected

124

if the vehicle has
stopped, detect if
the vehicle has
stopped at a bus
stop and if a bus
has been detected in a same lane
and behind the
vehicle

125

determine a stop-
ping probability of
the bus if a bus
stop has been de-
tected and

126

determine a turn
probability of the
bus if the bus has
been detected in
a lane intersecting
a lane of travel of
the vehicle

stopping maneu-
ver 281 at the bus
stop based on the
123  stopping probabi-
lity

127

turn     maneuver
283

128

approach maneu-
ver 284 toward
the vehicle

Fig. 1A

130

determine the bus-aligned maneuver based on the upcoming driving maneuver of the bus

detect an adja-
cent lane and a
pass-permitting
lane separation
line

detect a further
lane

133a

detect an acti-
vated turn indi-
cator of the bus
pointing in the
opposite direction of the bus
stop

132a

134a

stop maneuver
291 behind bus

overtaking ma-
neuver 292

lane change
maneuver 293

following ma-
neuver 294

drive-away ma-
neuver 295

131

132b

133b

134b

135

estimate a bus
turn radius

calculate a passable width

137a

136a

determine a
turn-enabling
distance

passable width less than bus and
vehicle width plus safety margin?

yes

yes

137b

136b

stopping ma-
neuver 296 the
turn enabling
distance away
from the inter-
section

if vehicle is al-
ready on the
road

det. pass-en-
abling positi-
on

137c

if vehicle is to
turn on the
road

det. stopping
position

137e

maneuver to
pass-enabling
position 297a

137d

maneuver to
stopping
position 298

137f

136c

140

causing the vehicle to
perform the bus-
aligned maneuver

Fig. 1B

Fig. 2A

Fig. 2B

Fig. 2C

Fig. 2D

Fig. 3

220

283

261

$d_{turn}$

296

210

262 250

Fig. 4

19

Fig. 5A

Fig. 5B

210

211

211

211

211

211

211

211

211

211

211

211

211

211

300

Fig. 6

300

320C

300B

350

340

340a

340b

340c

320

310

330

360

370

380

390

Fig. 7

Europäisches
Patentamt
European
Patent Office
Office européen
des brevets

# EUROPEAN SEARCH REPORT

**Application Number**

EP 25 15 3806

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2019/095809 A1 (HYUN YOONSUK [KR] ET AL) 28 March 2019 (2019-03-28) | 1-5, 11-13 | INV. B60W30/18 |
| A | * paragraphs [0054], [0057], [0062] - [0064], [0068], [0076] - [0078]; figures 1-4 * | 6-10 | B60W40/04 B60W50/00 B60W60/00 |
| | ----- | | |
| A | DE 10 2022 204335 B3 (VOLKSWAGEN AG [DE]) 12 October 2023 (2023-10-12) * the whole document * | 1-13 | |
| | ----- | | |
| A | US 2024/059278 A1 (ALI KAMRAN [US] ET AL) 22 February 2024 (2024-02-22) * the whole document * | 1-13 | |
| | ----- | | |

**TECHNICAL FIELDS SEARCHED (IPC)**

B60W

The present search report has been drawn up for all claims

| Place of search | Date of completion of the search | Examiner |
|---|---|---|
| Munich | 24 June 2025 | Granier, Frédéric |

EPO FORM 1503 03.82 (P04C01)

## ANNEX TO THE EUROPEAN SEARCH REPORT
## ON EUROPEAN PATENT APPLICATION NO.

EP 25 15 3806

This annex lists the patent family members relating to the patent documents cited in the above-mentioned European search report.
The members are as contained in the European Patent Office EDP file on
The European Patent Office is in no way liable for these particulars which are merely given for the purpose of information.

24-06-2025

| Patent document cited in search report | Publication date | Patent family member(s) | | Publication date |
|---|---|---|---|---|
| US 2019095809 A1 | 28-03-2019 | CN | 109552333 A | 02-04-2019 |
| | | EP | 3467799 A1 | 10-04-2019 |
| | | KR | 20190035159 A | 03-04-2019 |
| | | US | 2019095809 A1 | 28-03-2019 |
| DE 102022204335 B3 | 12-10-2023 | NONE | | |
| US 2024059278 A1 | 22-02-2024 | CN | 117584960 A | 23-02-2024 |
| | | DE | 102023101691 A1 | 22-02-2024 |
| | | US | 2024059278 A1 | 22-02-2024 |

EPO FORM P0459

For more details about this annex : see Official Journal of the European Patent Office, No. 12/82